# EUROPÄISCHE PATENTSCHRIFT

(11) **EP 0 903 570 B1**
(45) Veröffentlichungstag und Bekanntmachung des Hinweises auf die Patenterteilung: **26.07.2006**
(21) Anmeldenummer: 98810873.4
(22) Anmeldetag: 02.09.1998
(51) Int. Cl.: G01N 1/08, B25F 5/00, B25F 5/02, B28D 1/04, B28D 7/02

(54) **Antriebsgerät für Hohlbohrwerkzeuge**
Device for driving tubular drill
Dispositif pour entrainer un foret creux

(30) Priorität: 15.09.1997 DE 19740464
(43) Veröffentlichungstag der Anmeldung: 24.03.1999
(73) Patentinhaber: HILTI Aktiengesellschaft, 9494 Schaan (LI)
(72) Erfinder: Reitberger, Rudolf, 81379 München (DE); Ostermeier, Peter, 86911 Diessen (DE)
(74) Vertreter: Wildi, Roland

(56) Entgegenhaltungen:
- EP-A- 0 252 611
- EP-A- 0 332 328
- DE-C- 829 569
- US-A- 3 778 179
- US-A- 4 623 287

## Beschreibung

Die Erfindung betrifft ein Antriebsgerät für Hohlbohrwerkzeuge gemäss dem Oberbegriff des Patentanspruchs 1. Ein derartiges Gerät geht beispielsweise aus der EP 0 332 328 A hervor.

Aus dem DE-GM 1 898 626 ist ein Hohlbohrwerkzeug und eine Werkzeugaufnahme bekannt, in der das Hohlbohrwerkzeug mittels einer formschlüssigen Verbindung festlegbar ist. Die Werkzeugaufnahme weist eine Sacklochbohrung mit einem von der Innenwandung der Sacklochbohrung radial abragenden Vorsprung auf. Der Grund der Sacklochbohrung wird von einem Bodenteil gebildet. Das Hohlbohrwerkzeug ist mit einer an der Aussenseite angeordneten Nut versehen, die teilweise geneigt zur Längsachse des Hohlbohrwerkzeuges verläuft.

Zum Verbinden beider Teile werden diese zusammengesteckt und gegenseitig verdreht, bis ein entgegen der Bohrrichtung weisendes freies Ende des Hohlbohrwerkzeuges an dem in Bohrrichtung weisenden Grund der Sacklochbohrung zur Anlage gelangt. Mit Hilfe des Hohlbohrwerkzeuges lassen sich Bohrungen für Dübel oder Durchtrittsöffnungen für Rohrleitungen in harten Untergründen erstellen. Bei der Herstellung derartiger Bohrungen bzw. Durchtrittsöffnungen fallen im Innern des Hohlbohrwerkzeuges Bohrkerne an, die von Zeit zu Zeit aus dem Hohlbohrwerkzeug entfernt werden müssen. Die Hohlbohrwerkzeuge sind im bohrrichtungsseitigen Endbereich in der Regel mit Schneiden versehen sind, die den rohrförmigen Trägerkörper des Hohlbohrwerkzeuges in radialer Richtung zu beiden Seiten hin überragen. Da der Aussendurchmesser des Bohrkernes im wesentlichen gleich gross ist wie ein von den Schneiden gebildeter Innendurchmesser aber kleiner ist als der Innendurchmesser des rohrförmigen Trägerkörpers ist eine Entnahme der Bohrkerne aus dem Hohlbohrwerkzeug durch das den Schneiden gegenüberliegende Ende des rohrförmigen Trägerkörpers leichter möglich. Um eine Entnahme des Bohrkemes aus dem Hohlbohrwerkzeug in der vorbeschriebenen Weise durchführen zu können, ist es notwendig, dass das bekannte Hohlbohrwerkzeug und die Werkzeugaufnahme voneinander getrennt werden. Dieser Vorgang ist sehr zeitaufwendig. Zudem bedarf es eines entprechenden Werkzeuges, mit dem der rohrförmige Trägerkörper fest umgriffen werden kann, um diesen gegenüber der Werkzeugaufnahme verdrehen zu können. Insbesondere nach einer längeren Bearbeitung ist das Hohlbohrwerkzeug derart erwärmt, dass die Entnahme eines gelösten Hohlbohrwericzeuges aus der Werkzeugaufnahme mit blossen Händen nicht möglich ist.

Nach der EP0332328A weist ein Antriebsgerät für Hohlbohrwerkzeuge eine Werkzeugaufnahme mit einem separaten Bodenteil auf, welches koaxial formschlüssig geführt sowie axial druckvorgespannt ist. Eine antriebsseitige Entfernung des Bohrkerns ist durch diese Lösung nicht möglich.

Der Erfindung liegt die Aufgabe zugrunde, ein Antriebsgerät für Hohlbohrwerkzeuge zu schaffen, bei dem Bohrkerne entgegen der Bohrrichtung aus dem Hohlbohrwerkzeug schnell, sicher und einfach entnommen werden können, ohne dass das Hohlbohrwerkzeug aus der mit dem Antriebsgerät in Verbindung stehenden Werkzeugaufnahme entnommen werden muss

Die Lösung dieser Aufgabe erfolgt durch ein Antriebsgerät für Hohlbohrwerkzeuge, welches die im Patentanspruch 1 angeführten Merkmale aufweist. Durch die Entfembarkeit eines Bodenteiles von der Werkzeugaufnahme ergibt sich die Möglichkeit, dass Bohrkeme, die bei der Herstellung von Bohrungen bzw. Durchtrittsöffnungen entstehen durch die Werkzeugaufnahme hindurch entgegen der Bohrrichtung aus dieser entnommen werden können, ohne dass das Hohlbohrwerkzeug aus einer beispielsweise teilweise in das Antriebsgerät ragenden Werkzeugaufnahme entnommen werden muss. Das Bodenteil ist beispielsweise ein Teil des Gehäuses.

Insbesondere bei Hohlbohrwerkzeugen, die entgegen der Bohrrichtung beispielsweise mittels einer Gewindeverbindung in die Werkzeugaufnahme einsetzbar sind, brauchen ein Bodenteil, gegen das sie laufen können, um eine Verklemmung zwischen den Flanken der Gewindeverbindung erreichen zu können. Damit keine Reibung zwischen dem Bodenteil und einer entgegen der Bohrrichtung weisenden Stimseite des Hohlbohrwerkzeuges entsteht, wenn sich das Hohlbohrwerkzeug dreht und damit eine Entfemung des Bohrkemes entgegen der Bohrrichtung durch die Werkzeugaufnahme hindurch möglich ist, ist erfindungsgemäß das Bodenteil von einer Anschlagfläche der Werkzeugaufnahme gebildet, die senkrecht zu dessen Hauptachse verläuft und vom restlichen Teil der Werkzeugaufnahme entfembar ist. Die Anschlagfläche ist beispielsweise entlang der Hauptachse des Werkzeugaufnahme derart weit versetzbar,

dass der Abstand zwischen der Werkzeugaufnahme und der Anschlagfläche grösser ist als die Länge des zu entnehmenden Bohrkemes.

Eine ungehinderte Entnahme des Bohrkemes entgegen der Bohrrichtung aus der Werkzeugaufnahme erfolgt vorzugsweise mittels einer Anschlagfläche die aus der Axialprojektion der lichten Weite des Hohlbohrwerkzeuges entfembar ist. Dies kann beispielsweise in der Form erfolgen, das diese seitlich von der Werkzeugaufnahme entfernt wird.

Ein schnelles Einsetzen bzw. Entfemen eines gegebenenfalls mit einem Einsteckende in Verbindung stehenden Hohlbohrwerkzeuges in die Werkzeugaufnahme wird beispielsweise dadurch erreicht, dass das Hohlbohrwerkzeug an einem entgegen der Bohrrichtung weisenden Endbereich der Werkzeugaufnahme in diese eingesetzt und in Bohrrichtung verschoben wird, bis das Hohlbohrwerkzeug bzw. dessen Einsteckende an einer entgegen der Bohrrichtung weisenden Anschlagkante der Werkzeugaufnahme zur Anlage gelangt. Die axiale Festlegung des Hohlbohrwerkzeuges in der Werkzeugaufnahme erfolgt zweckmässigerweise mittels einer aus der gesamten Axialprojektion des gesamten Hohlbohrwerkzeuges entfembaren, drehbaren Anschlagfläche.

Die drehbare Anschlagfläche befindet sich beispielsweise in einem Handgriff, der als separates Bauteil ausgebildet ist und über eine Spannvorrichtung mit dem Gehäuse in Verbindung steht. Die Versetzbarkeit der Anschlagfläche kann vorteilhafterweise durch Verschwenken um die Spannvorrichtung erfolgen, die zum Teil eine im wesentlichen parallel zur Hauptachse der Werkzeugaufnahme verlaufende Achse bildet. Die Spannvorrichtung weist beispielsweise einen drehbaren Exzenter auf, mit dessen Hilfe der Handgriff am Gehäuse festlegbar bzw. lösbar ist damit ein Verschwenken des Handgriffes bzw. der Anschlagfläche erfolgen kann.

Die drehbare Anschlagfläche kann einem weiteren Vorschlag der Erfindung folgend an einem Handgriff angeordnet sein, der als separates Bauteil ausgebildet ist und über ein Gelenk mit dem Gehäuse in Verbindung steht. Die Achse dieses Gelenkes erstreckt sich zweckmässigerweise in einer senkrecht zur Hauptachse der Werkzeugaufnahme verlaufenden Ebene, so dass das Entfemen der Anschlagfläche durch ein Verschwenken um die Gelenkachse bzw. in einer im wesentlichen parallel zur Hauptachse stehenden Ebene erfolgt.

Bei der Bearbeitung von harten Untergrundmaterialien entstehen sehr hohe Temperaturen im Bereich der Schneiden des Hohlbohrwerkzeuges. Ein schnelles Verschleissen dieser Schneiden wird mit Kühlmittel verhindert, das während des Bohr vorganges dem Hohlbohrwerkzeug zugeführt wird. Um dieses Kühlmittel dem Innem des Hohlbohrwerkzeuges zuführen zu können, ist die Anschlagfläche vorzugsweise von einem Kühlmittelkanal durchsetzt, der mit einer Kühlmittelzuführeinrichtung in Verbindung steht, wobei die Austrittsmündung des Kühlmittelkanals in einer von der Anschlagfläche gebildeten Ebene liegt.

Die Kühlmittelzuführeinrichtung kann beispielsweise eine extem angeordnete Vorrichtung mit einer Pumpe sein, mit der Kühlmittel über eine Kühlmittelleitung dem Kühlmittelkanal zugeführt wird. Im Bereich des Gehäuses bzw. des Handgriffes ist vorteilhafterweise eine die Kühlmittelzuführeinrichtung unterbrechende Abschalteinrichtung angeordnet, die beim Entfemen der Anschlagfläche aktivierbar ist. Bei dieser Abschalteinrichtung handelt es sich beispielsweise um ein Magnetventil, das in der Kühlmittelleitung eingebaut und die Kühlmittelzuführeinrichtung zum Hohlbohrwerkzeug freigibt oder unterbricht.

Zum Entfemen eines Bohrkemes aus dem Innem des Hohlbohrwerkzeuges ist es von Vorteil, wenn die Anschlagfläche vom restlichen Teil der Werkzeugaufnahme entfemt und das Antriebsgerät auf den Kopf gestellt wird, damit der sich im Innem des Hohlbohrwerkzeuges befindliche Bohrkem herausrutschen kann. Um Beschädigungen umliegender Bauteile oder Gegenstände durch die Schneiden des Hohlbohrwerkzeuges verhindern zu können, wenn das Antriebsgerät auf den Kopf gestellt wird, ist vorzugsweise beim Entfemen der Anschlagfläche eine die Drehbewegung auf die Werkzeugaufnahme unterbrechende Abschalteinrichtung aktivierbar. Bei der Abschalteinrichtung handelt es sich beispielsweise um einen mit der elektrischen Verbindungsleitung in Verbindung stehenden elektrischen Schalter, bei dem ein Kontakt unterbrochen wird, sobald die Anschlagfläche vom restlichen Teil der Werkzeugaufnahme entfemt wird.

Die Erfindung wird anhand von Zeichnungen, die ein Ausführungsbeispiel wiedergeben näher erläutert. Es zeigen:
- Fig. 1: ein erfindungsgemässes Antriebsgerät für Hohlbohrwerkzeuge, teilweise geschnitten; die Anschlagfläche ist um eine im wesentlichen parallel zur Hauptachse der Werkzeugaufnahme ver schwenkbar;
- Fig. 2: ein weiteres Antriebsgerät für Hohlbohrwerkzeuge, teilweise geschnitten, die Antriebsfläche ist in einer im wesentlichen parallel zur Hauptachse stehenden Ebene verschwenkbar.

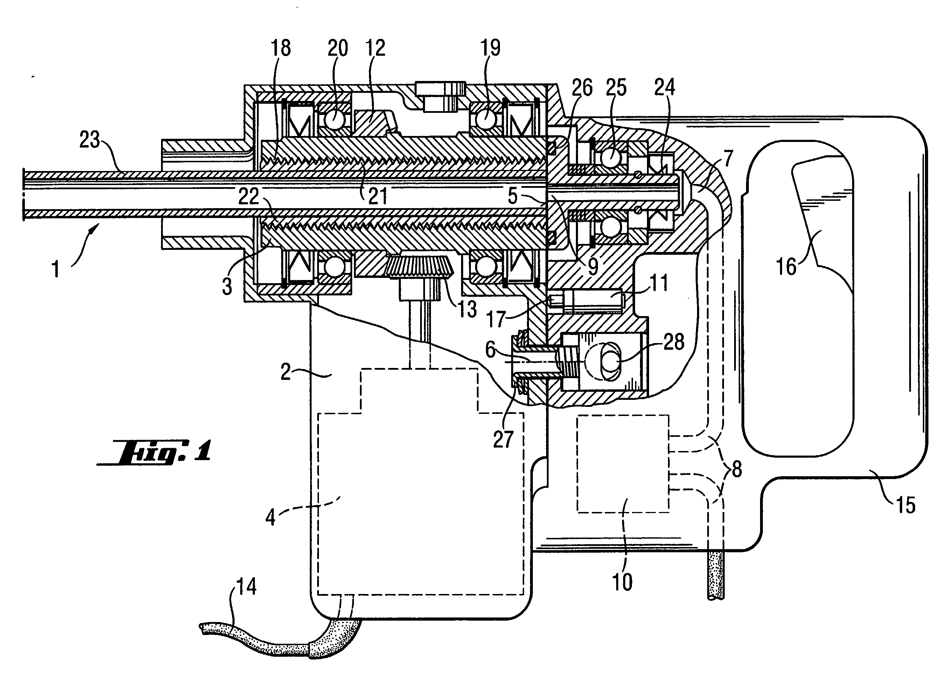

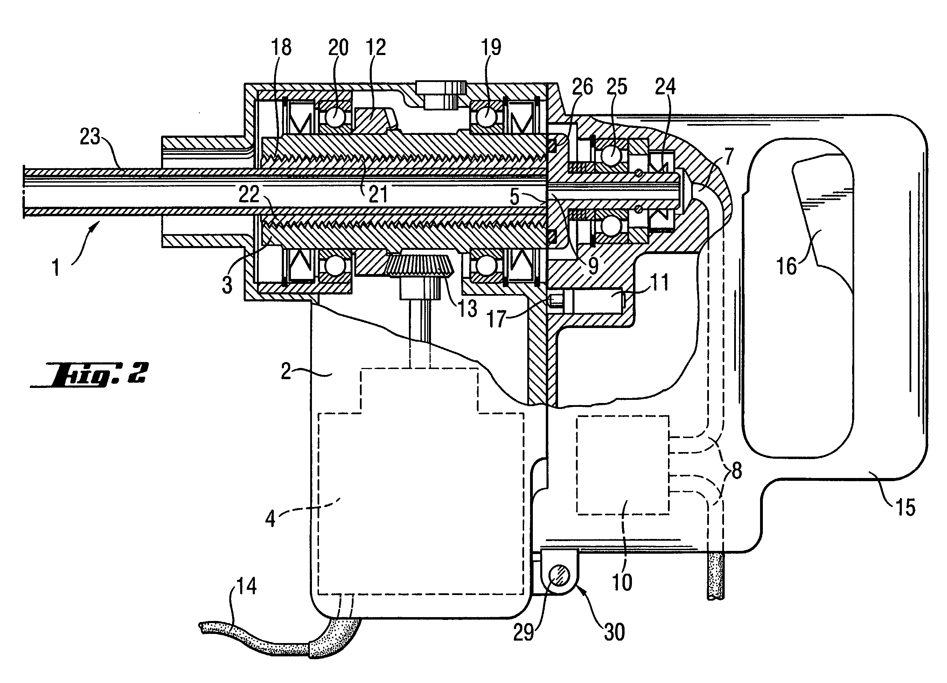

Da sich die Fig. 1 und 2 nur durch die Art der Verschwenkbarkeit unterscheiden werden aus Gründen der Vereinfachung für beide Figuren die gleichen Bezugszeichen verwendet. Der einzige Unterschied zwischen beiden Figuren besteht in der Ausgestaltung der Verschwenkbarkeit der Anschlagfläche. In Fig. 1 dient dieser Verschwenkbarkeit eine Achse 6 und in der Fig. 2 ein Gelenk 30.

Die in den Fig. 1 und 2 dargestellten Antriebsgeräte für Hohlbohrwerkzeuge zeigen ein Gehäuse 2, einen Handgriff 15 mit Betätigungsschalter 16, eine in dem Gehäuse 2 drehbar angeordnete Werkzeugaufnahme 3 und ein Hohlbohrvverkzeug 1.

Innerhalb des Gehäuses 2 befindet sich eine elektrische Antriebseinheit 4, mit der die Werkzeugaufnahme in Drehbewegung versetzbar ist. Die Antriebseinheit 4 ist über eine elektrische Verbindungsleitung 14 mit einer externen Stromquelle in Verbindung bringbar. Die Antriebseinheit 4 verfügt über eine Abtriebswelle, an deren freien Ende ein schrägverzahntes Ritzel 13 angeordnet ist, das mit einem schrägverzahnten Zahnrad 12 formschlüssig zusammenwirkt. Dieses schrägverzahnte Zahnrad 12 steht in fester Verbindung mit der Werkzeugaufnahme 3.

Die Werkzeugaufnahme 3 besitzt eine Längsachse, die senkrecht zur Längsachse der Antriebseinheit 4 verläuft. Der drehbaren Lagerung der Werkzeugaufnahme 3 innerhalb des Gehäuses 2 dienen zwei im Abstand voneinander angeordnete Lager 19, 20. Die Werkzeugaufnahme 3 weist eine zentrale Durchgangsbohrung auf, innerhalb der das Hohlbohrwerkzeug 1 festlegbar ist. Die Innenwandung der Durchgangsbohrung ist mit einem Innengewinde 21 versehen, das formschlüssig mit einem Aussengewinde 18 eines Einsteckendes 22 zusammenwirkt. Das Einsteckende 22 ist Teil des Hohlbohr werkzeuges 1 und ist fest mit einem rohrförmigen Trägerkörper 23 des Hohlbohrvverkzeuges 1 verbunden.

Als axialer Anschlag beim Eindrehen des Hohlbohrwerkzeuges 1 entgegen der Bohrrichtung in die Werkzeugaufnahme 3 dient eine senkrecht zur Längsachse des Hohlbohrwerkzeuges 1 verlaufende Anschlagfläche 5, die drehbar an dem Handgriff 15 angeordnet ist. Entgegen der Bohrrichtung schliesst sich an die drehbare Anschlagfläche 5 ein zylindrischer Führungsbereich 24 an, der ein sich in einer sacklochartigen Ausnehmung des Handgriffes 15 angeordnetes Lager 25 durchsetzt.

In der von der Anschlagfläche 5 gebildeten Ebene befindet sich die Austrittsmündung 9 eines sich durch einen Teil des Handgriffes 15 und den zylindrischen Führungsbereich 24 erstreckenden Kühlmittelkanals 7, der über eine Kühlmittelleitung 8 mit einer nicht dargestellten Kühlmittelzuführeinrichtung in Verbindung steht. Die Kühlmittelleitung 8 ist von einer Abschalteinrichtung 10 in Form eines Magnetventils unterbrochen, das die Zufuhr von Kühlmittel unterbricht, wenn die Anschlagfläche 5 vom restlichen Teil der Werkzeugaufnahme 3 entfemt wird.

Die Anschlagfläche 5 weist im Umfangsbereich eine umlaufend ausgebildete Vertiefung auf, die der Aufnahme eines Dichtungselementes in Form eines O-Ringes dient. Dieses Dichtungselement 26 drückt gegen die freie Stimseite der Werkzeugaufnahme 3 und sorgt dafür, dass Kühlmittel, das durch den Kühlmittelkanal 7 dem Hohlbohrwerkzeug 1 zugeführt wird, nicht zu den Lagern 19, 20 der Werkzeugaufnahme 3 gelangen kann. Das Magnetventil steht beispielsweise mit dem Betätigungsschalter 16 in Verbindung. Wenn der Betätigungsschalter 16 nicht gedrückt wird, dann sperrt das Magnetventil die Kühlmittelzufuhr.

An dem Handgriff 15 ist eine Abschalteinrichtung 11 in Form eines elektrischen Schalters angeordnet, mit dem die elektrische Verbindungsleitung 14 und somit die Stromzufuhr zur elektrischen Antriebseinheit 4 unterbrochen wird, wenn die Anschlagfläche 5 vom restlichen Teil der Werkzeugaufnahme 3 entfemt wird.

Die Entfemung der Anschlagfläche 5 vom restlichen Teil der Werkzeugaufnahme 3 erfolgt bei dem Antriebsgerät gemäss Fig. 1 durch Verschwenken um eine im wesentlichen parallel zur Hauptachse der Werkzeugaufnahme 3 verlaufende Achse 6 einer Spannvorrichtung, über die der Handgriff 15 an dem Gehäuse 2 festlegbar ist. Die Achse 6 wird gebildet von einer zwischen dem Handgriff 15 und dem Gehäuse 2 angeordneten, federbelasteten Spannschraube 27, die mit einem Exzenter 28 festziehbar ist. Der Exzenter 28 steht mit einem nicht dargestellten Spannhebel in Verbindung. Im gelösten Zustand der Spannvorrichtung ist der Handgriff 15 um einen geringen Weg von dem Gehäuse 2 entgegen der Bohrrichtung abhebbar, so dass das zwischen der Anschlagfläche 5 und der Werkzeugaufnahme 3 wirkende Dichtungselement 26 beim Verschwenken des Handgriffes 15 gegenüber dem Gehäuse 2 von der Werkzeugaufnahme 3 beabstandet ist. Der an dem Handgriff 15 angeordnete elektrische Schalter weist einen federbelasteten Kontaktstift 17 auf, der beim Verschwenken des Handgriffes 15 in eine die lichte Weite des Hohlbohrwerkzeuges 1 bzw. die axiale Projektionsfläche des gesamten Hohlbohrwerkzeuges 1 freigebende Position von dem Gehäuse 2 nicht mehr vorgespannt wird und somit einen Kontakt unterbricht, so dass der elektrischen Antriebseinheit 4 kein Strom mehr zugeführt wird.

Die Entfernung der Anschlagfläche 5 vom restlichen Teil der Werkzeugaufnahme 3 erfolgt bei dem Antriebsgerät gemäss Fig. 2 durch Verschwenken der Anschlagfläche 5 in einer im wesentlichen parallel zur Hauptachse der Werkzeugaufnahme 3 verlaufenden Ebene. Das Antriebsgerät weist zu diesem Zweck zwischen dem Handgriff 15 und dem Gehäuse 2 ein Gelenk 30 mit einer Drehachse 29 auf, die sich parallel zu einer von der Anschlagfläche 5 gebildeten Ebene erstreckt.

## Patentansprüche

1. Antriebsgerät für Hohlbohrwerkzeuge (1) mit einem Gehäuse (2), einer gegenüber dem Gehäuse (2) drehbar gelagerten Werkzeugaufnahme (3), einer Antriebseinheit (4), mit der die Werkzeugaufnahme (3) in Drehbewegung ver setzbar ist und einem Bodenteil das sich entgegen der Bohrrichtung an die Werkzeugaufnahme (3) anschliesst, wobei das Bodenteil von der Werkzeugaufnahme (3) entfernbar ist,
**dadurch gekennzeichnet, dass** das Bodenteil von einer Anschlagfläche (5) der Werkzeugaufnahme (3) gebildet ist, die senkrecht zu dessen Hauptachse verläuft und vom restlichen Teil der Werkzeugaufnahme (3) entfembar ist, wobei die Anschlagfläche (5) als axialer Anschlag für ein Hohlbohrwerkzeug (1) beim Eindrehen des Holhlbohrwerkzeuges (1) entgegen der Bohrrichtung in die Werkzeugaufnahme (3) dient.

2. Gerät nach Anspruch 1, **dadurch gekennzeichnet, dass** die Anschlagfläche (5) aus der Axialprojektion der lichten Weite des Hohlbohrwerkzeuges (1) entfembar ist.

3. Gerät nach Anspruch 1, **dadurch gekennzeichnet, dass** die Anschlagfläche (5) aus der Axialprojektion des gesamten Hohlbohrwerkzeuges (1) entfembar ist.

4. Gerät nach Anspruch 2 oder 3, **dadurch gekennzeichnet, dass** die Versetzbarkeit durch Verschwenken um eine im wesentlichen parallel zur Hauptachse der Werkzeugaufnahme (3) verlaufende Achse (6) erfolgt.

5. Gerät nach einem der Ansprüche 2 oder 3, **dadurch gekennzeichnet, dass** das Entfernen durch ein Verschwenken in einer im wesentlichen parallel zur Hauptachse der Werkzeugaufnahme (3) stehenden Ebene erfolgt.

6. Gerät nach einem der Ansprüche 1 bis 5, **dadurch gekennzeichnet, dass** die Anschlagfläche (5) von einem Kühlmittelkanal (7) durchsetzt ist, der mit einer Kühlmittelzuführeinrichtung in Verbindung steht, wobei die Austrittsmündung (9) des Kühlmittelkanals (7) in einer von der Anschlagfläche (5) gebildeten Ebene liegt.

7. Gerät nach Anspruch 6, **dadurch gekennzeichnet, dass** beim Entfernen der Anschlagfläche (5) eine die Kühlmittelzuführeinrichtung unterbrechende Abschalteinrichtung (10) aktivierbar ist.

8. Gerät nach einem der Ansprüche 1 bis 7, **dadurch gekennzeichnet, dass** beim Entfemen der Anschlagfläche (5) eine die Drehbewegung auf die Werkzeugaufnahme (3) unterbrechende Abschalteinrichtung (11) aktivierbar ist.

## Claims

1. Drive device for hollow drill tools (1), having a housing (2), a tool receptacle (3) which is mounted rotatable relative to the housing (2), a drive unit (4) with which the tool receptacle (3) can be made to rotate and a base member which adjoins the tool receptacle (3) against the drilling direction, whereby the base member is removable from the tool receptacle (3), **characterised in that** the base member comprises a stop surface (5) of the tool receptacle (3) which runs perpendicularly to its main axis and is removable from the remainder of the tool receptacle (3), whereby the stop surface (5) serves as an axial stop for a hollow drill tool (1) on twisting the hollow drill tool (1) into the tool receptacle (3) against the drilling direction.

2. Device according to claim 1, **characterised in that** the stop surface (5) is removable from the axial projection of the clear width of the hollow drill tool (1).

3. Device according to claim 1, **characterised in that** the stop surface (5) is removable from the axial projection of the overall hollow drill tool (1).

4. Device according to claim 2 or 3, **characterised in that** the displaceability takes place through rotation about an axis (6) running substantially parallel to the main axis of the tool receptacle (3).

5. Device according to one of the claims 2 or 3, **characterised in that** the removal takes place by rotation in a plane lying substantially parallel to the main axis of the tool receptacle (3).

6. Device according to one of the claims 1 to 5, **characterised in that** the stop surface (5) is passed through by a coolant channel (7), which communicates with a coolant feed apparatus, whereby the outlet opening (9) of the coolant channel (7) lies in a plane formed by the stop surface (5).

7. Device according to claim 6, **characterised in that** on removal of the stop surface (5), a switching off apparatus (10) interrupting the coolant feed can be activated.

8. Device according to one of the claims 1 to 7, **characterised in that** on removal of the stop surface (5), a switching off apparatus (11) interrupting the rotary movement of the tool receptacle (3) can be activated.

## Revendications

1. Appareil d'entraînement pour forets creux (1), avec un carter (2), un raccord d'outil (3) monté à rotation par rapport au carter (2), une unité d'entraînement (4) servant à mettre en rotation le raccord d'outil (3), et une partie de fond qui se raccorde au raccord d'outil (3) à l'opposé de la direction de forage, la partie de fond pouvant être retirée du raccord d'outil (3), **caractérisé en ce que** la partie de fond est formée par une surface de butée (5) du raccord d'outil (3), laquelle s'étend perpendiculairement à l'axe principal de celui-ci et peut être retirée de la partie restante du raccord d'outil (3), la surface de butée (5) servant de butée axiale à un foret creux (1) lors de l'enfoncement du foret creux (1) dans le raccord d'outil (3) à l'opposé de la direction de forage.

2. Appareil selon la revendication 1, **caractérisé en ce que** la surface de butée (5) peut être retirée de la projection axiale du diamètre intérieur du foret creux (1) .

3. Appareil selon la revendication 1, **caractérisé en ce que** la surface de butée (5) peut être retirée de la projection axiale de l'ensemble du foret creux (1).

4. Appareil selon la revendication 2 ou 3, **caractérisé en ce que** le déplacement s'effectue par pivotement autour d'un axe (6) s'étendant sensiblement parallèlement à l'axe principal du raccord d'outil (3).

5. Appareil selon une des revendications 2 ou 3, **caractérisé en ce que** le retrait s'effectue par pivotement dans un plan sensiblement parallèle à l'axe principal du raccord d'outil (3).

6. Appareil selon une des revendications 1 à 5, **caractérisé en ce que** la surface de butée (5) est traversée par un canal d'agent de refroidissement (7) qui communique avec un système d'amenée d'agent de refroidissement, l'orifice débouchant de sortie (9) du canal d'agent de refroidissement (7) se trouvant dans un plan formé par la surface de butée (5).

7. Appareil selon la revendication 6, **caractérisé en ce que**, lors du retrait de la surface de butée (5), un dispositif d'arrêt (10) interrompant le système d'amenée d'agent de refroidissement peut être activé.

8. Appareil selon une des revendications 1 à 7, **caractérisé en ce que**, lors du retrait de la surface de butée (5), un dispositif d'arrêt (11) interrompant le mouvement de rotation imposé au raccord d'outil (3) peut être activé.
